Europäisches Patentamt

European Patent Office

Office européen des brevets

(11) Veröffentlichungsnummer: **0 462 584 A1**

# EUROPÄISCHE PATENTANMELDUNG

(21) Anmeldenummer: **91110029.5**

(51) Int. Cl.5: **C05F 17/02**

(22) Anmeldetag: **17.06.91**

(30) Priorität: **20.06.90 DE 4019604**

(43) Veröffentlichungstag der Anmeldung:
**27.12.91 Patentblatt 91/52**

(84) Benannte Vertragsstaaten:
**DE DK FR GB IT NL**

(71) Anmelder: **Kassner, Edith**
**Ebbingshof 92**
**W-4423 Gescher(DE)**

(71) Anmelder: **Kassner, Jürgen**
**Ebbingshof 92**
**W-4423 Gescher(DE)**

(72) Erfinder: **Kassner, Edith**
**Ebbinghof 92**
**W-4423 Gescher(DE)**

(74) Vertreter: **Habbel, Hans-Georg, Dipl.-Ing.**
**Postfach 3429 Am Kanonengraben 11**
**W-4400 Münster(DE)**

(54) **Kompostbehälter.**

(57) Die Erfindung schlägt eine in einer Ebene flexible und damit rollbare, aber zugfeste und in der anderen Ebene biegesteife Gittermatte als Kompostbehälter einzusetzen vor.

FIG.2

Die Erfindung bezieht sich auf einen Kompostbehälter gemäß dem Oberbegriff des Hauptanspruches.

Der Hauptanspruch geht von dem DE-GM 74 24 268 aus.

In dieser Literaturstelle wird ein aus einer langgestreckten Kunststoffmatte bestehender Kompostbehälter beschrieben, der eine Vielzahl von Öffnungen aufweist, wobei die Matte rollbar ist und damit der Kompostbehälter gebildet werden kann, wobei sich die Enden der Matte überlappen und hier mit Befestigungsmittel fixierbar sind.

Bei näherem Studium des gattungsbildenden Schutzrechtes muß aber festgestellt werden, daß es sich bei dieser Matte nur um eine tiefgezogene Kunststoffolie handeln kann, denn anders sind die Öffnungen nicht anbringbar. Die Öffnungen sind regelmäßig in Reihen angeordnet und damit ist die Matte sowohl in der einen wie in der anderen Richtung in gleicher Weise flexibel.

Die aus einer tiefgezogenen Matte ausgeformten, trichterförmigen Öffnungen haben den großen Nachteil, daß dann, wenn die Trichter in das Innere des Kompostbehälters vorstehen, hier das gewünschte Nachsacken des eingefüllten Materials behindert wird, und wenn die Öffnungen mit ihrer großen Seite zum Inneren des Kompostbehälters gerichtet sind, schnell ein Verstopfen dieser Öffnungen durch das eingefüllte Material erfolgt, so daß die erforderliche Belüftung nicht mehr möglich ist.

Die Herstellung des Kompostbehälters aus einer Tiefziehfolie hat den Nachteil, daß diese tiefgezogenen Stellen spleißanfällig sind und eine geringe Schlagzähigkeit aufweist, so daß dadurch ein schnelles Zerstören der Matte im relativ rauhen Gartenbetrieb eintreten muß.

Das Verhältnis von Öffnungsgröße und Mattenfläche ist ungünstig, denn die Gesamtfläche der Öffnungen ist auf jeden Fall kleiner als die Gesamtfläche der geschlossenen Wandungsteile, so daß eine relativ schlechte Belüftung des Kompostes erfolgt.

Der Erfindung liegt die Aufgabe zugrunde, einen kostengünstig und in den unterschiedlichsten Größen erstellbaren Kompostbehälter zu schaffen, für den keine tragenden Elemente und Rahmenkonstruktionen benötigt werden, der auch von einem Laien schnell aufgebaut werden kann, korrosionsfest ist und trotzdem die erforderliche Belüftung des in ihm enthaltenen zu kompostierenden Materials ermöglicht.

Diese der Erfindung zugrundeliegende Aufgabe wird durch die Lehre des Hauptanspruches gelöst.

Die Erfindung schlägt also vor, daß der Kompostbehälter sich dadurch kennzeichnet, daß

a) die Kunststoffmatte als Gittermatte ausgebildet ist,

b) die lange Seite dieser Gittermatte flexibel rollbar ist,

c) in dieser Richtung der flexiblen Rollbarkeit die Matte aber eine erhöhte Zugfestigkeit aufweist,

d) die kurze Seite biegesteif ausgebildet ist,

e) die Öffnungen als Gittermaschen rechteckig und längsorientiert sind.

Durch diese Merkmale wird erreicht, daß gegenüber dem gattungsbildenden Stand der Technik wesentlich weniger Kunststoffmaterial zur Erzielung eines gleichgroßen Kompostbehälters eingesetzt werden muß.

Der erhebliche, von innen nach außen gerichtete Druck des Materials auf die Wandung wird durch die in Längsrichtung eine erhöhte Zugfestigkeit aufweisenden Gitterteile aufgenommen. Bei einer Füllhöhe von etwa 1 m tritt eine Zugbelastung von etwa 500 kg/m auf. Da diese Kraft als Dauerlast einwirkt, ist eine wesentlich höhere Zugfestigkeit der Behälterwandung notwendig, um einen eventuellen Bruch, verursacht durch Kriecheinflüsse, zu verhindern. Hierbei ist eine Temperaturbelastung bis $70^{\circ}$ C, die beim Kompostierprozeß entstehen kann, zu berücksichtigen. Höhere Temperaturen führen besonders bei Polyolephinen, die sich wegen ihrer chemischen Beständigkeit als Rohstoff für diese Gitter anbieten, zu verminderter spezifischer Festigkeit und zu verstärktem Kriechen. Dies ist durch entsprechende Festigkeitszugabe auszugleichen.

Gegenüber dem gattungsbildenden Stand der Technik ist das Verhältnis von Wandungsbereich und Öffnungsbereich genau umgekehrt, d. h. es sind größere Öffnungsbereiche als geschlossene Wandungsbereiche vorhanden. Hierdurch erfolgt eine gute Belüftung des Behälterinnenraumes.

Dieser so gebildete, vorzugsweise runde Behälter kann von jedem Laien schnell aufgebaut werden. Bei Nichtgebrauch ist eine solche Einrichtung raumsparend zu lagern.

Durch einen Längsschnitt, der an einem Ende des Gitters beispielsweise 20 bis 30 cm von der Längsseite entfernt durch die Querstäbe geführt wird und dessen Länge etwa 40 bis 50 cm betragen kann, bildet sich im aufgestellten Zustand des Kompostbehälters unten eine Öffnung zur Entnahme von Kompostgut. Ein Einschnitt dieser Größenordnung beeinträchtigt nicht die Stabilität des Systems, da jeder einzelne Maschenstab in Längsrichtung für sich als Zugelement wirkt.

Das Entleeren und das Umsetzen geschieht über die Öffnung, die durch das Entriegeln des Gitters erstellt wird. Das Gitter kann nach dem Öffnen ohne Kraftaufwand und Werkzeuge entfernt und wieder aufgestellt werden.

Weiterhin können zur Festlegung des Kompostbehälters Heringe, Anker od. dgl. vorgesehen sein, die ähnlich wie die Zeltheringe die unteren horizontal verlaufenden Gittermaschen am Boden festlegen.

Ein Ausführungsbeispiel der Erfindung wird nachfolgend anhand der Zeichnung erläutert.

Die Zeichnung zeigt dabei in

Fig. 1 einen Ausschnitt aus einer Gittermatte und in

Fig. 2 einen Kompostbehälter im aufgebauten Zustand.

In der Zeichnung ist eine Matte 1 gezeichnet, die eine Längsseite L und eine kurze Seite K aufweist. Die Matte 1 ist dabei in der Ebene der langen Seite L rollbar, während sie in Richtung der kurzen Seite K biegesteif ausgebildet ist. Die Matte besteht z. B. aus einem gereckten Kunststoffgitter, das durch monoaxiale Verstreckung in Längsrichtung eine erhöhte Zugfestigkeit erhalten hat.

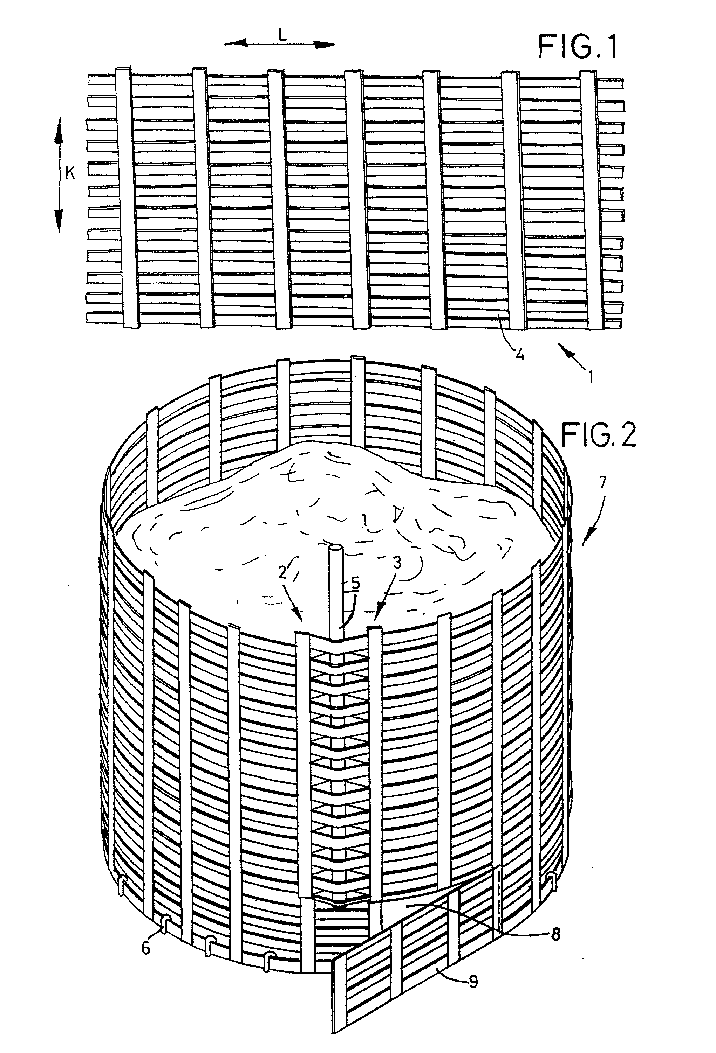

Fig. 2 zeigt, daß die in Fig. 1 dargestellte Matte zu einem Kompostbehälter 7 gebogen werden kann, der in Fig. 2 rund dargestellt ist. Die Enden 2 und 3 der Matte 1 werden über einen Riegelstab 5 verbunden, der durch die einzelnen Gittermaschen 4 der Matte 1 geführt werden kann. Eine andere Verbindung der Enden 2, 3 ist aber in gleicher Weise denkbar, beispielsweise über entsprechende Haken od. dgl.

Der Kompostbehälter 7 kann über Heringe 6 od. dgl. am Boden festgelegt werden, was vor allem vor und während des Beschickens sinnvoll sein kann, um den Kompostbehälter an dem vorgesehenen Standort zu fixieren. Dies bietet auch beim Entleeren den notwendigen Halt.

Durch einen Längsschnitt, der an einem Ende des Gitters etwa 20 bis 30 cm oberhalb der Unterkante durch die Querstäbe geführt wird und dessen Länge etwa 40 bis 50 cm betragen kann, wird eine Klappe 9 geschaffen, die eine Öffnung 8 verschließt. Wenn die Klappe 9 geöffnet wird, kann Kompostgut hier entnommen werden. Eine Unterbrechung in dieser Größenordnung beeinträchtigt die Stabilität des Systems nicht, da jeder einzelne Maschenstab in Längsrichtung für sich als Zugelement wirkt.

Im Prinzip kann jede Gittermatte eingesetzt werden, die die nötige Flexibilität und Zugfestigkeit in der Längsrichtung und die erforderliche Steifigkeit in der Querrichtung aufweist. Als bekannte Beispiele sind u. a. sogenannte "Geogitter" zu erwähnen. Schließlich ist es gemäß der Erfindung möglich, an der Gittermatte außen einen flexiblen Mantel anzubringen, der aus einer außen liegenden Schutzhülle und einem isolierenden Kern besteht. Auf der Innenseite des Kerns ist eine Schicht angebracht, die trotz engem Anliegen an der Gittermatte eine ausreichende Belüftung des innerhalb der Gittermatte gelagerten Kompostgutes ermöglicht. Dieser Mantel kann durch ein Klettenband oder Gurte geschlossen werden. Der Mantel dient vor allem zur Schnellkompostierung.

Werden die Gittermatten aus Kunststoff hergestellt, können hierfür regenerierbare Kunststoffe eingesetzt

**Patentansprüche**

1. Kompostbehälter aus einer langgestreckten Kunststoffmatte, die eine Vielzahl von Öffnungen aufweist und derart zusammenrollbar ist, daß sich die Mattenenden überlappen und hier durch Befestigungsmittel fixierbar sind, gekennzeichnet durch eine Gittermatte (1) als Kunststoffmatte, deren lange, flexibel rollbare Seite (L) eine erhöhte Zugfestigkeit aufweist, während die kurze Seite (K) biegesteif ausgebildet ist, wobei die Öffnungen als Gittermaschen (4) rechteckig und/oder längsorientiert sind.

2. Gittermatte nach Anspruch 1, dadurch gekennzeichnet, daß die Verbindung der Enden (2, 3) über einen durch die Gittermaschen (4) geführten Riegelstab (5) erfolgt.

3. Gittermatte nach Anspruch 1 oder 2, gekennzeichnet durch wenigstens eine im unteren Bereich des Kompostbehälters (7) ausgebildete, durch eine Klappe (9) verschließbare Öffnung (8).

4. Gittermatte nach Anspruch 3, dadurch gekennzeichnet, daß die Öffnung (8) durch einen Längsschnitt in der Matte (1) erstellt ist.

5. Gittermatte nach einem oder mehreren der vorhergehenden Ansprüche, dadurch gekennzeichnet, daß das Gitter aus wiederverwertetem Kunststoff besteht.

6. Gittermatte nach einem oder mehreren der vorhergehenden Ansprüche, gekennzeichnet durch Heringe (6) zur Festlegung des aus der Matte (1) geformten Kompostbehälters (7).

FIG.1

FIG.2

**Europäisches
Patentamt**

# EUROPÄISCHER
# RECHERCHENBERICHT

Nummer der Anmeldung

# EP 91 11 0029

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 273 222 (W. JAMES)<br>* Anspruch 1; Seite 1, Zeilen 9-13,31-73; Zeichnung 1 *<br>– – – | 1,2,6 | C 05 F 17/02 |
| A | DE-A-2 363 115 (F. HANFELD)<br>* Anspruch; ganz Dokument *<br>– – – | 1,2 | |
| P,A | DE-A-3 915 055 (J. MANDEL)<br>* Patentansprüche 1,2; Spalte 1, Zeilen 3-25 *<br>– – – – – | 1,2 | |

| | RECHERCHIERTE SACHGEBIETE (Int. Cl.5) |
|---|---|
| | C 05 F<br>E 04 H |

Der vorliegende Recherchenbericht wurde für alle Patentansprüche erstellt

| Recherchenort | Abschlußdatum der Recherche | Prüfer |
|---|---|---|
| Den Haag | 02 September 91 | RODRIGUEZ FONTAO M-B |